Europäisches Patentamt

European Patent Office

Office européen des brevets

(11) Veröffentlichungsnummer: **0 456 981 A2**

(12) **EUROPÄISCHE PATENTANMELDUNG**

(21) Anmeldenummer: 91103665.5

(22) Anmeldetag: **11.03.91**

(51) Int. Cl.⁵: **H01M 10/40**

(30) Priorität: **12.05.90 DE 4015368**

(43) Veröffentlichungstag der Anmeldung:
**21.11.91 Patentblatt 91/47**

(84) Benannte Vertragsstaaten:
**CH DE ES FR GB LI NL**

(71) Anmelder: **VARTA Batterie Aktiengesellschaft
Am Leineufer 51
W-3000 Hannover 21(DE)**

(72) Erfinder: **Herr, Rudolf, Dr.
Parkstrasse 34
W-6233 Kelkheim(DE)**

(74) Vertreter: **Kaiser, Dieter Ralf, Dipl.-Ing.
Gundelhardtstrasse 72
W-6233 Kelkheim/Ts.(DE)**

(54) **Galvanisches Sekundärelement mit einer Lithium intercalierenden negativen Kohlenstoffelektrode.**

(57) Sekundärelemente auf der Basis eines Li-Systems, bei denen das Li von einem bereichsweise mikrokristallinen Kohlenstoffmaterial (durch einen Verkokungsprozeß gewonnen) intercaliert wird, behalten selbst nach wiederholten Hochtemperatur-Zwischenlagerungen ( z. B. 13 Tage bei 60 °C) eine hohe Zyklenstabilität, wenn ihr nichtwässriger Elektrolyt eines der Lösungsmittel Propylencarbonat oder Ethylencarbonat mit einer darin gelösten Arsenverbindung, ausgewählt aus der Reihe $LiAsF_6$, $AsF_3$ und $LiAsF_4$, enthält. Neben diesen Grundbestandteilen des Elektrolyten wirken sich gegebenenfalls Zusätze an weiteren aprotischen Lösungsmitteln als Cosolventien sowie an Leitsalzen wie $LiClO_4$, $LiBF_4$, $LiPF_6$ oder $LiCF_3SO_3$ auf die Zyklisierbarkeit günstig aus.

EP 0 456 981 A2

Rank Xerox (UK) Business Services

Die Erfindung betrifft ein galvanisches Sekundärelement mit einer Lithium intercalierenden negativen Kohlenstoffelektrode, einer ein reduzierbares Aktivmaterial enthaltenden positiven Elektrode und einem nichtwässrigen Elektrolyten.

Bekannt sind wiederaufladbare Lithium-Systeme des Typs $Li/TiS_2$ oder $Li/MoS_3$, bei denen der elektrische Vorgang der Entladung mit einer Intercalierung des Anodenmetalls in das schichtförmige Kristallgitter des Kathodenmaterials, hier dem Sulfid eines Übergangsmetalls, einhergeht. Beim Wiederaufladen findet Deintercalierung der entstandenen Entladeprodukte, $Li_xTiS_2$ bzw. $Li_xMoS_3$, statt.

Batterien auf dieser Grundlage haben den Nachteil einer verhältnismäßig geringen Zyklenstabilität, die durch das elementare Lithium bedingt ist. Es werden weniger als 200 Zyklen erreicht.

Es wurde auch schon die Fähigkeit von Graphit, Metallkationen in seine Schichtenstruktur einzulagern, zur Herstellung negativer Batterieelektroden ausgenutzt. Derartige Elektroden erwiesen sich jedoch als wenig brauchbar wegen hoher Selbstentladung und geringer Stromausbeute.

Aus einem speziellen Kohleprodukt, welches aus bestimmten Fraktionen des Steinkohlenteers oder aus Kunstharzen durch einen Verkokungsprozeß erhältlich ist und bis auf Korngrößen von wenigen $\mu$m Durchmesser zerkleinert wird, ergibt sich ein geeignetes Material zur reversiblen Intercalierung bzw. Dotierung mit $Li^+$-Ionen, so daß damit eine brauchbare negative Elektrode für eine Sekundärbatterie mit geringem Gewicht, geringer Selbstentladung und hoher Energiedichte verfügbar wird.

Aus der US-PS 4 668 595 sind auch bereits Sekundärelemente mit solchen negativen Elektroden in vielen Varianten bekannt. Das aktive Material ihrer positiven Elektroden ist dabei aus Mischoxiden gebildet, die ihrerseits $Li^+$-Ionen in homogener Phase aufnehmen können, so daß sich Ladung und Entladung unter wechselseitiger Ein- und Auslagerung des Lithiums an den Wirtssubstanzen der Anoden- und Kathodenseite abspielt.

Die genannte Druckschrift zählt auch im Zusammenhang mit den Zellelektrolyten eine große Anzahl brauchbarer Elektrolytsalze sowie eine Vielzahl von organischen Lösungsmitteln auf. Aus den Aufzählungen läßt sich indessen weder ein Leitsalz noch ein Lösungsmittel für einen besonders gut geeigneten Elektrolyten entnehmen.

Den allgemeinen Vorteilen der bekannten Zellen, daß sie nämlich hohe Spannungen (bis 4,2 V) besitzen und daß das als Anodenmetall verwendete Alkalimetall (Li, Na) nicht in der explosionsgefährdeten reinen Form vorliegt, steht als Nachteil ein bei Hochtemperatur-Lagerung, z. B. 10 Tage bei 60 °C, auftretender irreversibler Kapazitätsverlust gegenüber. Da hier eine ungünstige Beeinflussung der negativen Elektrode durch den Elektrolyten vermutet wurde, stellte sich die Aufgabe, einen Elektrolyten bereitzustellen, bei dessen Anwesenheit der durch Hochtemperaturlagerung bedingte Kapazitätsverlust auf ein Mindestmaß reduziert ist.

Die Aufgabe wird erfindungsgemäß durch ein Sekundärelement gelöst, wie es im Patentanspruch 1 definiert ist.

Danach ist es besonders vorteilhaft, einen Zellenelektrolyt zu verwenden, der im wesentlichen aus einer Lösung einer oder mehrerer der Arsenverbindungen $LiAsF_6$, $AsF_3$ und $LiAsF_4$ in Propylencarbonat (PC) oder Ethylencarbonat (EC) besteht. Besonders bevorzugt ist ein $LiAsF_6$/PC-Elektrolyt. Erfindungsgemäße Elektrolyte können außer PC bzw. EC als dem Hauptlösungsmittel auch noch zumindest ein weiteres aprotisches Lösungsmittel als Cosolvens enthalten.

Ebenso wie eine Mischung aus mehreren Lösungsmitteln können auch noch weitere Elektrolytsalze neben den genannten Arsenverbindungen am Elektrolyten insgesamt beteiligt sein. Als vorteilhaft haben sich Leitsalze aus der Reihe $LiClO_4$, $LiBF_4$, $LiPF_6$, $LiCF_3SO_3$ erwiesen.

Der günstige Einfluß eines erfindungsgemäßen $LiAsF_6$/PC-Elektrolyten auf das Kapazitätsverhalten erfindungsgemäßer Sekundärzellen bei Hochtemperaturlagerung, das im wesentlichen durch die Stabilität der intercalierenden Kohleelektrode in dem jeweiligen Elektrolyten bestimmt wird, ergibt sich aus einigen Vergleichsversuchen.

Bei diesen Versuchen wurden Chargen von jeweils 100 mg eines Gemisches von C-Material (auf Korngrößen < 0,25 mm gesiebt) und 10 % Polyethylenpulver in die Böden von Knopfzellen eingepreßt, die Knopfzellen weiterhin mit Polypropylenvlies-Separatoren und 0,2 mm dicken Li-Folien als Gegenelektroden bestückt und darauf unter Vakuum mit verschiedenen Elektrolyten befüllt.

Das C-Material war ein sogenannter Nadelkoks, ein durch zeitlich hinausgeschobene thermische Behandlung erhaltenes Verkokungsprodukt mit mikrokristallinen Bereichen.

Zwischen wiederholt aufeinanderfolgenden Lagerungen von jeweils 13 Tagen Dauer bei 60 °C wurden die Zellen dieses $Li/Li^+$-Systens zwischen 0 und 1,0 V bei einer Stromdichte von 0,25 $mA/cm^2$ gezykelt und die Entladekapazitäten bestimmt. Diese sind, in An pro kg fertige Elektrodenmischung ausgedrückt, in einer nachfolgenden Tabelle zusamengestellt. Die Leitsalz-Konzentration im jeweils gewählten Elektrolyten war stets 1,0 molar. In Spalte 0 sind die Ausgangskapazitäten, in den Spalten 1 bis 3 die jeweils nach der 1., 2.,

EP 0 456 981 A2

und 3. Hochtemperaturlagerung gemessenen Kapazitäten festgehalten.

| Elektrolyt | Kapazität (Ah/kg) | | | |
|---|---|---|---|---|
| | 0 | 1 | 2 | 3 |
| LiClO$_4$/PC | 160 | 134 | 105 | 43 |
| LiAsF$_6$/PC | 151 | 122 | 122 | 122 |
| LiCF$_3$SO$_3$/PC | 149 | 110 | 84 | |
| LiBF$_4$/PC | 139 | 0,03 | | |
| LiAsF$_6$/2−Me−THF | 90 | 0,44 | | |

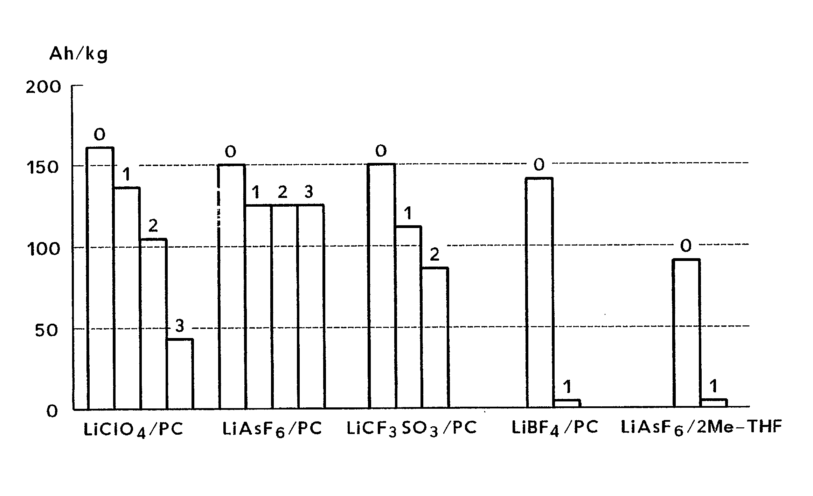

In der Figur sind diese Zahlen durch Balken von entsprechender Länge dargestellt. Die Versuchsbefunde werden dadurch besonders augenfällig. Die Figur zeigt, daß ein LiAsF$_6$/PC-Elektrolyt gemäß der Erfindung einen gerissen Kapazitätsverfall der negativen Elektrode nach einer ersten Hochtemperaturlagerung zwar nicht verhindert, dann jedoch einen weiteren Verfall stoppt.

In allen anderen Fällen ist der Kapazitätsschwund von einer Hochtemperaturlagerung zur nächsten progressiv.

Mit Vorbehalt noch günstig verhalten sich die Leitsalze LiClO$_4$, LiCF$_3$SO$_3$ und LiBF$_4$ insofern, als sie in Verbindung mit PC als aprotischem Lösungsmittel zumindest einer guten Ausgangskapazität nicht im Wege stehen. Als Zusätze zu einem LiAsF$_6$/PC-Elektrolyten werden sie dessen kapazitätsstabilisierende Wirkung noch unterstützen.

Das unbefriedigende Kapazitätsverhalten der negativen Elektrode in dem LiAsF$_6$/2-Methyltetrahydrofuran-Elektrolyten ist ganz eindeutig auf das Lösungsmittel zurückzuführen, welches nicht der erfindungsgemäßen Wahl entspricht.

**Patentansprüche**

1. Galvanisches Sekundärelement mit einer Lithium intercalierenden negativen Kohlenstoffelektrode, einer ein reduzierbares Aktivmaterial enthaltenden positiven Elektrode und einem nichtwässrigen Elektrolyten, dadurch gekennzeichnet, daß der Elektrolyt Propylencarbonat oder Ethylencarbonat mit einer darin gelösten Arsenverbindung, ausgewählt aus der Reihe LiAsF$_6$, AsF$_3$ und LiAsF$_4$, umfaßt.

2. Sekundärelement nach Anspruch 1, dadurch gekennzeichnet, daß der Elektrolyt neben Propylencarbonat oder Ethylencarbonat zumindest ein weiteres aprotisches Lösungsmittel enthält.

3. Sekundärelement nach einem der Ansprüche 1 oder 2, dadurch gekennzeichnet, daß in dem Elektrolytlösungsmittel neben der Arsenverbindung weitere Leitsalze gelöst sind.

4. Sekundärelement nach Anspruch 3, dadurch gekennzeichnet, daß die weiteren Leitsalze aus der Reihe LiClO$_4$, LiBF$_4$, LiPF$_6$, LiCF$_3$SO$_3$ ausgewählt sind.

3

EP 0 456 981 A2